# EUROPÄISCHE PATENTSCHRIFT

(11) **EP 0 593 971 B1**
(45) Veröffentlichungstag und Bekanntmachung des Hinweises auf die Patenterteilung: **10.07.1996**
(21) Anmeldenummer: 93116056.8
(22) Anmeldetag: 05.10.1993
(51) Int. Cl.: B23Q 11/00, B23B 47/34

(54) **Verfahren zum Entfernen von Spänen aus Werkstücken**
Method of removing chips from workpieces
Procédé pour enlever des copeaux d'une pièce

(30) Priorität: 23.10.1992 DE 4235749; 05.11.1992 DE 4237336
(43) Veröffentlichungstag der Anmeldung: 27.04.1994
(73) Patentinhaber: Dürr GmbH, D-70435 Stuttgart (DE)
(72) Erfinder: Wüller, Karl-Heinz, D-52152 Simmerath (DE)
(74) Vertreter: Hoeger, Stellrecht & Partner

(56) Entgegenhaltungen:
- DD-A- 254 348
- DD-A- 280 271
- DE-A- 3 000 815
- DE-A- 3 521 542
- US-A- 3 215 350
- US-A- 4 398 961

## Beschreibung

Beim zerspanenden Bearbeiten von Werkstücken, insbesondere bei der Herstellung von Sacklöchern mittels eines Bohrers, aber auch beim Innenausdrehen, d. h. bei der Bearbeitung der Wandung eines engen Hohlraums mit einem Drehwerkzeug auf einer Drehmaschine, beim Schneiden von Innengewinden und dergleichen stellt sich häufig das Problem, in dem Hohlraum festsitzende Späne zu entfernen. Dieses Problem hat sich in der Praxis besonders bei solchen Werkstoffen als schwierig erwiesen, welche lange und verhältnismäßig feste bzw. steife Späne bilden, wie dies z. B. bei Messing und vielen Aluminiumlegierungen der Fall ist. Diese Schwierigkeit kann sich aber auch bei der zerspanenden Bearbeitung von Kunststoff-Werkstücken ergeben.

Solche festsitzenden Späne kann man auf die herkömmliche Weise, nämlich durch Ausblasen des Hohlraums mit einer Preßluftdüse, wie es die US-A-3 215 350 anhand von Sacklöchern beschreibt, häufig gar nicht entfernen, zumindest besteht aber die Gefahr, daß sich nicht alle Späne aus dem Hohlraum austreiben lassen. Dies gilt ebenso für Späne, die sich beim Waschen von Werkstücken in Reinigungsanlagen nicht entfernen lassen. Andere mechanische Reinigungsverfahren, wie z. B. Herausstoßen der Späne mittels eines Dorns, sind oft nicht anwendbar, so z. H. grundsätzlich nicht bei Sacklöchern, oder sie sind zu zeitaufwendig und damit zu kostspielig.

Der Erfindung lag nun die Aufgabe zugrunde, ein Verfahren zu schaffen, mit dem sich festsitzende Späne und sonstige, ähnliche Verunreinigungen, insbesondere metallische Späne, aus Werkstück-Hohlräumen schnell und einfach entfernen lassen, und ausgehend von einem Verfahren zum Entfernen von festsitzenden Spänen und dergleichen aus einem insbesondere durch zerspanende Bearbeitung oder auch gußtechnisch hergestellten Hohlraum eines Werkstücks durch einen Preßluftstrahl läßt sich diese Aufgabe erfindungsgemäß dadurch lösen, daß ein heißer Preßluftstrahl mit einer solchen Temperatur verwendet und so lange auf die Späne gerichtet wird, daß deren Steifigkeit vermindert wird, bis sich die Späne durch den Preßluftstrahl aus dem Werkstück-Hohlraum entfernen lassen.

Bei Auffindung des erfindungsgemäßen Verfahrens ging der Erfinder von folgender Überlegung aus: Bei der zerspanenden Bearbeitung metallischer Werkstücke werden die dabei entstehenden Späne in der Regel noch dadurch "gehärtet", daß die beim Zerspanen anfallenden, meist sehr heißen Späne durch bei der Bearbeitung verwendete Kühl- oder Schneidflüssigkeiten und/oder durch die Umgebungsluft abgeschreckt, d. h. rasch abgekühlt werden, wodurch in den Spänen erhebliche Eigenspannungen entstehen, die sich durch einen heißen Luftstrahl abbauen lassen, so daß die Späne an Festigkeit bzw. Steifigkeit verlieren. Mit einem hinreichend heißen Luftstrahl lassen sich Späne aber auch bis wenig unterhalb des Schmelzpunkts ihres Werkstoffs erhitzen, wodurch sie weich werden. In jedem Fall lassen sich dann die ursprünglich in dem Werkstück-Hohlraum festsitzenden Späne durch den Preßluftstrahl aus dem Werkstück-Hohlraum herausblasen, so wie dies bei lose in einem Werkstück-Hohlraum liegenden Spänen bei der üblichen Reinigungsmethode der Fall ist.

So ließen sich z. B. bei einem Werkstück aus einer Aluminiumlegierung Späne aus einer als Sackloch gestalteten Gewindebohrung M8x22 mit einem Preßluftstrahl von 550°C und 6 bar aus einer Düsenöffnung, deren Abstand von den Spänen ca. 5 mm betrug, in nur ungefähr 5 Sekunden sämtlich aus der Bohrung entfernen, ohne daß das Material der Bohrungswandung dabei nennenswert erwärmt wurde.

Das erfindungsgemäße Verfahren hat außerdem noch den Vorteil, daß das Werkstück durch den heißen Preßluftstrahl getrocknet wird, was deshalb von Bedeutung ist, weil bei einer zerspanenden Bearbeitung üblicherweise mit Kühl- bzw. Schneidflüssigkeiten gearbeitet wird. Ebenso gilt dies für Reinigungsflüssigkeiten aus Waschanlagen.

Für einen völlig anderen Zweck, nämlich zum Entgraten eines Werkstücks, ist die Verwendung eines mittels einer beheizten Düse erzeugten heißen Gasstrahles bekannt (Beier, "Industrielles Entgraten", Verlag Technik GmbH, Berlin, 1990, Seite 97); da die Grate dabei aufgeschmolzen werden sollen und müssen, wird in dieser Veröffentlichung darauf hingewiesen, daß sich dieses bekannte Verfahren nur für geringe Grathöhen und Werkstoffe mit niedrigem Schmelzpunkt, z. B. Thermoplastwerkstoffe, eignet.

Im folgenden wird ein Ausführungsbeispiel des erfindungsgemäßen Verfahrens anhand der beigefügten schematischen Zeichnung erläutert.

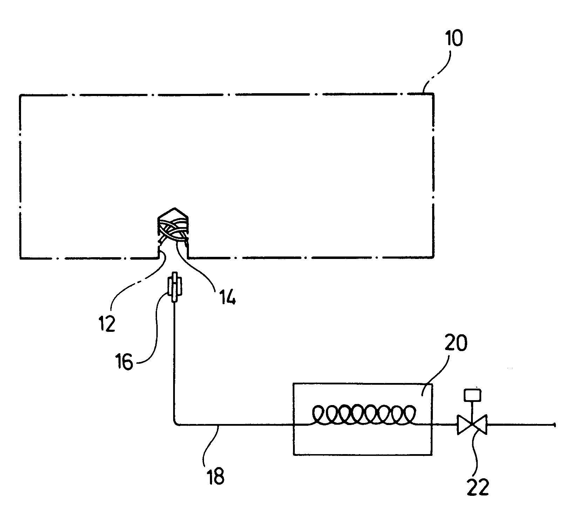

Die Zeichnung zeigt ein aus einer Aluminiumlegierung bestehendes Werkstück 10, in dem ein Sackloch 12 hergestellt wurde, in dem nach der Bearbeitung bei dieser gebildete Späne 14 festsitzen.

Eine erfindungsgemäße Vorrichtung zur Durchführung des erfindungsgemäßen Verfahrens besteht nun aus einer Preßluftdüse 16, die elektrisch beheizt sein kann und an eine Preßluftleitung 18 angeschlossen ist, welche einen Lufterhitzer 20 und ein Ventil 22 enthält. Gespeist wird die Preßluftleitung 18 aus einem nicht dargestellten Preßluftspeicher, welcher Preßluft mit einem Druck von 6 bar liefert. Erfindungsgemäß ist der Lufterhitzer 20 und/oder die Heizung der Preßluftdüse 16 so ausgebildet, daß letztere einen Preßluftstrahl mit einer Temperatur von ca. 600°C liefert. Nähert man die Preßluftdüse 16 den Spänen 14 bis auf einen Abstand von ca. 5 mm, so können innerhalb weniger Sekunden sämtliche Späne 14 aus dem Sackloch 12 herausgeblasen werden.

Aus dem Vorstehenden ergibt sich, daß sich das erfindungsgemäße Verfahren besonders für metallische Werkstücke und insbesondere für solche metallische Werkstücke eignet, welche aus einem metallischen Werkstoff bestehen, der bei einer zerspanenden Bearbeitung zur Bildung verhältnismäßig langer und zäher Späne neigt.

Durch das erfindungsgemäße Verfahren können metallische Späne auch weichgeglüht oder gar geschmolzen werden. Außerdem ist es bei Verwendung eines geeigneten Gasstrahls auch möglich, Späne zu verbrennen, z. B. im Falle von Kunststoffspänen, ohne daß dadurch das eigentliche Werkstück beschädigt wird, da die Masse der Späne ja sehr klein und damit die Einwirkzeit des heißen Gasstrahls sehr kurz ist.

## Patentansprüche

1. Verfahren zum Entfernen von in einem Hohlraum festsitzenden Spänen aus einem durch zerspanende Bearbeitung hergestellten Hohlraum eines Werkstücks durch einen Preßluftstrahl, dadurch gekennzeichnet, daß ein heißer Preßluftstrahl mit einer solchen Temperatur verwendet und so lange auf die Späne gerichtet wird, daß deren Steifigkeit vermindert wird, bis sich die Späne durch den Preßluftstrahl aus dem Hohlraum entfernen lassen.

2. Verfahren nach Anspruch 1, dadurch gekennzeichnet, daß die Temperatur und die Einwirkzeit des Preßluftstrahls wenigstens so hoch gewählt werden, daß zumindest die Eigenspannungen im Spänewerkstoff abgebaut werden.

3. Verfahren nach Anspruch 1, dadurch gekennzeichnet, daß ein Preßluftstrahl verwendet wird, dessen Temperatur zumindest gleich der Schmelztemperatur des Spänewerkstoffs ist.

4. Verfahren nach Anspruch 1 zum Entfernen von aus einer Aluminiumlegierung bestehenden Spänen, dadurch gekennzeichnet, daß ein Preßluftstrahl mit einer Temperatur von ca. 500°C bis ca. 600°C verwendet wird.

5. Verfahren nach einem oder mehreren der vorstehenden Ansprüche, dadurch gekennzeichnet, daß Preßluft mit einem Druck von mindestens ca. 5 bar verwendet wird.

6. Verfahren nach Anspruch 5, dadurch gekennzeichnet, daß der Preßluftdruck ca. 6 bar beträgt.

7. Verfahren nach einem oder mehreren der vorstehenden Ansprüche, dadurch gekennzeichnet, daß zur Erzeugung des Preßluftstrahls eine Düse verwendet und diese in einem Abstand von weniger als ca. 10 mm von den Spänen angeordnet wird.

8. Verfahren nach Anspruch 7, dadurch gekennzeichnet, daß mit einem Düsenabstand von ca. 5 mm gearbeitet wird.

## Claims

1. Method for removing chips jammed in a cavity from a workpiece cavity produced by machining by means of a jet of compressed air, characterized in that a jet of hot compressed air is used at such a temperature and directed onto the chips for such a time that their rigidity is diminished to the extent that the chips are removable from the cavity by the jet of compressed air.

2. Method as defined in claim 1, characterized in that the temperature of and the exposure time to the jet of compressed air are selected at least sufficiently high for at least the inherent tensions in the chip material to be reduced.

3. Method as defined in claim 1, characterized in that a jet of compressed air at a temperature at least equal to the melting temperature of the chip material is used.

4. Method as defined in claim 1 for removing chips consisting of an aluminium alloy, characterized in that a jet of compressed air at a temperature of from approximately 500°C to approximately 600°C is used.

5. Method as defined in any or several of the preceding claims, characterized in that compressed air at a pressure of at least approximately 5 bars is used.

6. Method as defined in claim 5, characterized in that the pressure of the compressed air is approximately 6 bars.

7. Method as defined in any or several of the preceding claims, characterized in that a nozzle is used to produce the jet of compressed air and this nozzle is disposed at a spacing of less than approximately 10 mm from the chips.

8. Method as defined in claim 7, characterized in that a nozzle spacing of approximately 5 mm is used.

## Revendications

1. Procédé pour éliminer des copeaux logés dans un volume vide d'un volume vide créé lors de l'usinage par enlèvement de copeaux d'une pièce par un jet d'air comprimé, caractérisé en ce qu'on dirige sur les copeaux un jet d'air comprimé très chaud à une température telle et suffisamment longtemps pour que leur raideur soit diminuée, jusqu'à ce que les copeaux soient éliminés du volume vide par le jet d'air comprimé.

2. Procédé selon la revendication 1, caractérisé en ce qu'on choisit la température et la durée d'application du jet d'air comprimé à des valeurs suffisamment élevées pour pouvoir au moins annuler les contraintes internes dans le matériau de copeau.

3. Procédé selon la revendication 1, caractérisé en ce qu'on utilise un jet d'air comprimé dont la température est au moins égale à la température de fusion du matériau de copeau.

4. Procédé selon la revendication 1, pour éliminer des copeaux en alliage d'aluminium, caractérisé en ce qu'on utilise un jet d'air comprimé ayant une température d'environ 500°C à environ 600°C.

5. Procédé selon l'une ou plusieurs des revendications précédentes, caractérisé en ce qu'on utilise de l'air comprimé ayant une pression d'au moins 5 bar environ.

6. Procédé selon la revendication 5, caractérisé en ce que la pression d'air comprimé est d'environ 6 bar.

7. Procédé selon l'une ou plusieurs des revendications précédentes, caractérisé en ce que pour produire le jet d'air comprimé on utilise une buse et on la place à une distance inférieure à environ 10 mm des copeaux.

8. Procédé selon la revendication 7, caractérisé en ce qu'on travaille avec une distance de buse d'environ 5 mm.
